# EUROPÄISCHE PATENTANMELDUNG

(11) **EP 2 545 767 A2**
(43) Veröffentlichungstag der Anmeldung: **16.01.2013**
(21) Anmeldenummer: 12005018.2
(22) Anmeldetag: 06.07.2012
(51) Int. Cl.: A01K 5/00

(54) **Futtermischwagen**

(30) Priorität: 14.07.2011 DE 102011051833
(71) Anmelder: B. Strautmann & Söhne GmbH & Co. KG, 49196 Bad Laer (DE)
(72) Erfinder: Bevermann, Wilhelm, 49196 Bad Laer (DE)
(74) Vertreter: Hoffmeister, Helmut

(57) **Zusammenfassung**

Bekannte Futtermischwagen, die über horizontale oder vertikale Mischschnecken verfügen, erfordern häufig einen hohen Leistungsbedarf, sind verschleißanfällig und können die Struktur des Futters beeinträchtigen. Bei anderen bekannten Futtermischwagen, bei denen der Mischvorgang beispielsweise mit einer Misch- und Wurfwalze ausgeführt wird, besteht die Gefahr Wickelerscheinungen und Verstopfungen im Bereich der Mischwalze.

Der neue Futtermischwagen soll das Futter leichtzügig und verschleißarm vermischen wobei Störungen im Bereich der Mischwalze vermieden werden sollen. Diese Aufgabe wird dadurch gelöst, dass bei einem verfahrbaren oder selbstfahrenden Futtermischwagen zur Aufbereitung von Mischfutter mit einem umlaufenden Transportförderer, der an der Unterseite eines Mischraumes das auf ihm lagernde Futter horizontal bewegt und es an wenigstens einem Endbereich nach oben hin fördert und einer Walze, die mit dem Transportförderer zusammenwirkt und das nach oben geförderte Futter ergreift und in den Mischraum des Mischsystems zurückwirft, die Walze (30) mit einer Leit- und Staueinrichtung (33) zusammenwirkt, welche so angebracht ist, dass das in Richtung eines Endbereiches vom Transportförderer (19) geförderte Futter mittels der Leit- und Staueinrichtung (33) von der Walze (30) zurückgehalten wird.

## Beschreibung

Die Erfindung betrifft einen Futtermischwagen zum Entnehmen, Mischen und Verteilen von Futter aus Flachsilos nach dem Obergriff des Anspruchs 1.

Futtermischwagen für die Viehfütterung, insbesondere für Milch- und Rindvieh, sind weitgehend bekannt. Das häufig in so genannten Flachsilos bevorratete Futter wird aus diesen Silos entnommen, vorzugsweise gemischt und anschließend dem Vieh in Form eines mit einer Ausbringeinrichtung erzeugten Futterschwades vorgelegt. Die zur Mischung der in einen Mischraum des Futtermischwagens eingebrachten Futterkomponenten eingesetzten Mischsysteme unterscheiden sich teils erheblich. So sind beispielsweise Mischsysteme mit horizontalen oder vertikalen Mischschnecken bekannt. Ferner sind auch Systeme bekannt, die das Futter mittels Kratz- oder Forderbändern umwälzen, wobei diese auch durch rotierende Walzen unterschützt werden.

Die Futtermischwagen mit waagerechter Anordnung der Mischwalzen erfordern einen hohen Leistungsbedarf, da zwischen Behälterwänden und Mischschnecken, besonders im wannenförmigen Bodenbereich, durchgeleitetes Futter stark zusammengepresst wird, was neben einem hohen Leistungsbedarf und damit verbundenen hohen Energiekosten auch zu hohem Verschleiß an Mischschnecken und Behälterwänden führt. Beim Mischen von Futter, selbst bei geringem Feuchtigkeitsgehalt, vermatscht und vermust dieses und wird dann von den Tieren beim Fressen selektiert. Die vermusten Futteranteile bleiben liegen und führen teils zu merklichen Futterverlusten.

Nachteilig ist weiterhin, dass die ausgequetschten Futtersäfte z.B. Essig- und Buttersäure, zu Säurefraß und starken Rosterscheinungen führen, was die Lebensdauer insbesondere von Behältern und Mischschnecken reduziert.

Futtermischwagen mit vertikalen Mischsystemen weisen innerhalb des Mischraumes eine oder mehrere vertikal ausgerichtete Mischschnecken auf. Auch bei diesen Systemen besteht insbesondere im unteren Bereich der Mischraumwände ebenfalls die Gefahr von Verquetschungen des Futters, so dass, oft nach relativ kurzer Einsatzzeit, hohe Verschleißschäden auftreten können, da die im Allgemeinen kegelförmigen, sich nach oben verjüngenden Mischschnecken im unteren Durchmesserbereich das Futter mit hoher Pressdichte an den Mischraumwänden entlang führen. Bei zu hoher Verdichtung werden auch hier aggressive Säuren aus dem Futter gequetscht, wodurch die Zerstörung der Behälterwände beschleunigt wird.

Ein weiterer Nachteil ist, dass, insbesondere bei feuchterer Silagen, Futterbestandteile miteinander verknäulen und verkleben, so dass sich während des Mischvorganges beispielsweise tennisballgroße Klumpen bilden können und die Mischung insgesamt inhomogen ist. Eine homogene Mischung ist jedoch Vorraussetzung dafür, dass die zu fütternden Tiere das Futter nicht selektieren.

Die vorgenannten Futtermischwagen, insbesondere diejenigen mit horizontalen Schnecken, haben einen sehr hohen Leistungsbedarf und neigen zu vorzeitigem Verschleiß und damit verbundenen teuren Reparaturarbeiten. Sie erfordern daher eine schwere und stabile Bauweise und haben einen hohen Energiebedarf.

Weiterhin ist aus DE 195 44 231 ein Gerät zur Entnahme, zum Mischen und Verteilen von Silagefutter bekannt, welches in einer leichteren, Leistung einsparenden Bauweise ausgeführt ist. Futterpressungen beim Mischen entfallen hierbei weitgehend, was zu verringertem Reibverschleiß und durch Reduzierung der Säureausquetschung, zu verringerter Säurekorrosion führt. Nachteilig an diesem Gerät ist, dass insbesondere bei langhalmiger Futterstruktur, wie beispielsweise schlecht geschnittener Grassilage, die Gefahr von Wickelerscheinungen an der Mischwalze besteht. Weiterhin ist das Querband im Bereich der Mischwalze angeordnet, wodurch die Übergabe des Futters auf das Querband erschwert wird. Weiterhin ist es nachteilig, dass aus dem Mischraum in Richtung Mischwalze gefördertes Material die Walze von hinten blockiert, da die Walze sowohl aus dem Mischraum als auch aus dem vom Transportband herunterfallenden Bereich Futter zugeführt und die Walze insofern von beiden Seiten belastet wird. Dies führt zu einem Blockieren der Walze und dazu, dass das System nur bei gering gefülltem Futtermischwagen einsetzbar ist.

Aus EP 1 527 678 A1 ist ein Futtermischwagen bekannt, der über eine von oben befüllbare Mischkammer und wenigstens zwei im inneren der Mischkammer angeordnete Mischwerkzeuge verfügt. Bei den Mischwerkzeugen handelt es sich um vertikal angeordnete Mischschnecken, die jeweils einen auf dem Boden der Mischkammer projizierten Arbeitskreis (A) überstreichen. Im Zwischenbereich (13) zwischen den Arbeitskreisen (A) ist eine Durchtrittsöffnung (14) freilassende Leiteinrichtung angeordnet, durch die das Entstehen von toten Ecken, d.h. Bereichen, in denen eine Futterdurchmischung nur schlecht oder gar nicht erfolgt, verhindert werden soll.

Diese Leiteinrichtung stellt somit eine Speziallösung für Futtermischwagen mit wenigstens zwei vertikalen, im Wesentlichen kegelförmigen, Mischorganen dar. Bei einer solchen Anordnung stellen grundsätzlich diejenigen Bereiche der Mischkammer, die nicht von den rotierenden Mischorganen überstrichen werden, Problemzonen bzw. tote Ecken dar. Bei derartigen Leiteinrichtungen handelt es sich deshalb um im Wesentlichen keilförmige Wandungselemente, die die Mischkammer im Bereich zwischen den Mischorganen einschnüren und hierdurch Futteransammlungen an diesen Stellen verhindern.

Eine solche Leiteinrichtung ist für Futtermischwagen mit anderen als vertikalen Mischschnecken völlig unzweckmäßig und auch ungeeignet.

Die vorliegende Erfindung hat sich das Ziel gesetzt, einen Futtermischwagen zu schaffen, welcher von den genannten Mängeln der Mischsysteme und Verteileinrichtungen nicht mehr betroffen ist. Das Futter soll leichtzügig und verschleißarm vermischt werden, ohne dass es an den Mischorganen, insbesondere der Mischwalze, zu Störungen durch beispielsweise sich um die Walze wickelnde Futterbestandteile kommt. Auch soll es möglich sein, das Transportvolumen weitestgehend auszulasten, nicht nur bis zur Unterkante der Mischwalze.

Die Aufgabe wird erfindungsgemäß mit einem Futtermischwagen nach dem Oberbegriff des Anspruches 1 dadurch gelöst, dass die Walze mit einer Leit- und Staueinrichtung zusammenwirkt, welche so angebracht ist, dass das in Richtung eines Endbereiches vom Transportförderer geförderte Futter mittels der Leit- und Staueinrichtung von der Walze zurückgehalten wird, wodurch die Walze nicht verstopfen kann.

Die Ausrüstung einer Mischvorrichtung mit einer Walze sowie einem Transportband erübrigt den Einsatz von hinsichtlich ihrer Leistungsanforderungen aufwendigeren Mischschnecken und reduziert den hohen Leistungsbedarf der Mischvorrichtung durch pressfreies Umwälzen des Futters mittels des leichtzügigen Transportbandes. Das Futter wird durch die Verteilwirkung der den Mischvorgang unterstützenden Walze, welche auch dazu dient, Futterverdichtungen aufzulösen und zu verteilen, zu einer homogenen Mischung aufbereitet.

Das vom Transportband an die Walze herangeführte Futter wird von dieser nicht zwangsweise verknetet, sondern radial beschleunigt und in den Mischraum zurückgeworfen, wo es sich breitflächig auf das bereits dort befindliche Futter legt. Der Mischprozess läuft dabei in Form eines Kreislaufes ab: Das Futter wird kontinuierlich vom Transportband in Richtung Walze gefördert. Die Walze löst Futterpartikel in größeren und kleineren Portionen aus dem ihr zugeführten Futterstrom, bzw. erfasst das in ihren Wirkbereich kommende Futter und wirft es wieder nach hinten in den Mischraum. Die die Mischwalze teilweise umhüllende Leit- und Staueinrichtung verhindert, dass das im Mischraum befindliche Futter, welches durch das Transportband Richtung Walze gefördert wird, gegen die Walze gepresst wird.

Soweit der Mischraum einen Befüllungsgrad aufweist, der so groß ist, dass das Förderband mehr Futter nach vorne fördert, als die Walze nach hinten werfen kann, zieht sich das Förderband unter dem Futter durch. Die erfindungsgemäße Leit- und Staueinrichtung verhindert, dass das Futter vom Transportband gegen die Walze gedrückt wird und diese somit ausbremst oder dass sich die Walze und gegebenenfalls auf ihr angeordnete Werkzeuge, wie beispielsweise Zinken, mit Futter zusetzen bzw. das Futter aufwickeln und die Walze als Folge davon das Futter nicht mehr in den Mischraum wirft, sondern lediglich in der Runde dreht.

Fehlende Press- und Quetschmöglichkeiten reduzieren zudem Reibverschleiß und Korrosionsschäden.

In einer bevorzugten Ausgestaltung der Erfindung ist der Futtermischwagen mit einer Ladevorrichtung ausgestattet, so dass sich die Befüllung des Mischraums mit einer zusätzlichen Maschine, beispielsweise einem Traktor mit Frontlader, erübrigt. Bei dieser Ladeeinrichtung kann es sich beispielsweise um eine Fräseinrichtung, ein Schneidschild oder eine Ladeschaufel handeln. Wesentlich ist, dass der Bediener des Futtermischwagens autark und unabhängig von einer weiteren Maschine das Futter laden kann.

Besonders vorteilhaft ist es, wenn das Futter nicht nur mittels einer Ladeschaufel aufgenommen sondern auch mittels eines geeigneten Werkzeuges, vorzugsweise eines Schneidschildes, aus einem Flachsilo entnommen werden kann.

Weiterhin ist es von Vorteil wenn die Walze an ihrer Oberfläche mit Werkzeugen besetzt ist. Diese Werkzeuge können auch so gestaltet sein, dass sie eine zerkleinernde Wirkung aufweisen, also beispielsweise als scharfkantige Messer ausgelegt sind. Eventuell im Futterstrom vorhandene Verklumpungen werden so aufgelöst und die Homogenität der Futtermischung verbessert.

Von Vorteil ist es, wenn die Walze an ihren Enden mit Schneckenspiralen ausgestattet ist, deren Förderrichtung zur Mitte des Laderaumes gerichtet ist. Hierdurch wird das in diesem Bereich von der Walze erfasste Futter in Richtung Fahrzeugmitte transportiert. Weiterhin erhalten die durch die Zentrifugalkraft radial beschleunigten Futterkomponenten einen zusätzlichen, zur, bezogen auf die Fahrtrichtung, Mitte des Fahrzeuges gerichteten Impuls, so dass beim Mischvorgang die Gefahr von Futterverlusten durch über den Rand des Mischbehälters geworfene bzw. fallende Futterkomponenten reduziert wird.

In einer bevorzugten Ausgestaltung des erfindungsgemäßen Futtermischwagens ist die Walze innerhalb des Mischraumes beweglich gelagert, so dass der Abstand zwischen Walze und Transportband variiert werden kann. Die bewegliche Lagerung kann beispielsweise realisiert werden, indem die seitlichen Lagerzapfen der Walze von Schwingenarmen aufgenommen werden, welche wiederum in den Seitenwänden des Mischraumes gelagert sind. Es soll aber nicht ausgeschlossen sein, dass eine lineare Bewegung der Mischwalze durch entsprechende Führungsmittel realisiert wird. Mittels der variablen Einstellung kann der Abstand der Walze zum Transportband an den Befüllungsgrad des Mischraumes angepasst werden, so dass auch bei kleineren Mischrationen, deren Füllgrad nicht an eine fest installierte Walze heranreicht, das vom Transportband an die Walze herangeführte Futter von der auf ein niedriges Niveau eingestellten Walze erfasst und anschließend über Kopf nach hinten in den Mischraum zurückgeworfen werden kann Um zum einen den Effekt der die Walze teilweise umhüllenden Leit- und Staueinrichtung zu verstärkten, und zum anderen die Futterzufuhr nur unwesentlich zu beeinträchtigen, ist es weiterhin günstig, wenn die Leit- und Staueinrichtung unterhalb der Walze eine Verlängerung aufweist.

Auch eine oder mehrere nach oben führende Verlängerungen der Leit- und Staueinrichtung können deren Fördereigenschaften, insbesondere das Lösen des in den Mischraum zu fördernden Futters von der Walze verbessern.

In einer vorteilhaften Ausgestaltung ist oberhalb der Walze eine Abdeckung vorgesehen, welche verhindert, dass das von der Walze beschleunigte Futter aus dem Mischwagen heraus geworfen wird. Die Abdeckung kanalisiert den Futterstrom vielmehr in die gewünschte Förderrichtung.

Da die Flugbahnen der von der Walze nach hinten ausgeworfenen Futterpartikel, in Abhängigkeit beispielsweise von ihrem Gewicht und ihrer Abwurfrichtung, unterschiedlich ausfallen, ist es günstig, wenn diejenigen Futterpartikel, deren Flugbahn über die Oberkante des den Mischraum begrenzenden, abgesenkten, Schneidschildes weist, nicht über diese Oberkante geworfen, sondern von einer an der Abdeckung angebrachten Prallplatte abgebremst werden und als Folge davon in den unterhalb des Prallbleches befindlichen Bereich des Mischraumes fallen.

Um das Transportband vor Beschädigungen zu schützen ist es an seiner Unterseite und an der Stirnseite von einem Schutzmantel abgedeckt. Der Schutzmantel verhindert zudem, dass Futterreste, welche beim Betrieb des Transportbandes nicht in der gewünschten Weise an die Walze oder, beim zur Ablage eines Futterschwades entgegengesetzt laufendem Transportband, an das Förderband übergeben werden, während des weiteren Transports unter den Mischwagen fallen und die Fahrstrecke verunreinigen.

Vorteilhaft ist es weiterhin, wenn das Transportband, welches vorzugsweise mit Mitnehmerleisten bestückt ist, das auf ihm lagernde Futter im Endbereich vertikal oder nahezu vertikal nach oben befördert. Der vorhandene Raum zur Ausgestaltung des Mischraumes wird so optimal genutzt.

Die Flussrichtung des Futters während des Mischvorganges wird positiv beeinflusst, wenn das Transportband im Endbereich um einen Winkel (α) in Richtung Walze umgelenkt ist. Der Futterfluss wird so, nachdem er zunächst vom stirnwandseitigen Bereich des Transportbandes weitgehend vertikal nach oben gefördert worden ist, in Richtung Walze nach hinten umgelenkt.

In einer bevorzugten Ausführungsform ist eine Ausbringeinrichtung, bei der es sich vorzugsweise um ein Querförderband handelt, am hinteren Ende des Bodens angeordnet. Ein im Gegensatz hierzu im vorderen Bereich angeordnetes Förderband, wie in DE 19544231 offenbart, erfordert einen speziell gestalteten vorderen Bereich des Mischraumes um zu gewährleisten, dass das auszubringende Futter auf das Querförderband abgelegt wird. Weiterhin ermöglicht ein im Heckbereich angeordnete Querförderband die Ablage eines sich über die gesamte Länge des Futterganges erstreckenden Futterschwades auch in Ställen, die sackgassenartig enden und in die der Futtermischwagen deshalb rückwärts eingefahren werden muss, um einen möglichst langen Futterschwad zu erzeugen. Bei einem Futtermischwagen mit stirnseitig angeordnetem Querförderband endet der Futterschwad auch bei rückwärtsgerichteter Einfahrt nicht an der rückwärtigen Begrenzung des Stalles, sondern deutlich eher.

Um zum einen während der Befüllung das Querförderband abzudecken und zum anderen während des Fütterns eine Abdichtung zwischen Querförderband und der heckseitigen Begrenzung des Mischraumes, dem Schneidschild herzustellen, ist es besonders günstig, wenn das Querförderband mit einer verschwenkbaren Abdeckklappe abgedeckt ist.

Es soll jedoch nicht ausgeschlossen werden, dass in einer anderen Ausführungsform das Querförderband in einen Bereich unterhalb des Transportbodens eingeschwenkt oder eingezogen und auf diese Weise abgedeckt wird.

In der bevorzugten Ausführungsform, in der eine Abdeckklappe vorhanden ist, die das Querförderband in der beschriebenen Weise abdeckt, überbrückt die Abdeckklappe zudem eine gegebenenfalls zwischen der Schürfkante und der Oberseite des Transportbandes bestehende Höhendifferenz und verhindert, dass Stauungen an der Übergangskante zum Transportband entstehen, wenn das von der Silowand abgetrennte Futter durch Einschwenken des Schneidschildes in den Mischraum transportiert wird.

Besonders günstig ist es auch, wenn das am Ende der Ladevorrichtung angeordnete Schneidschild mit seiner Unterkante, aus der Schneidstellung durch die offene Heckseite, über die Abdeckplatte bis oberhalb des Transportbodens in den Mischraum einschwenkbar ist. Auf diese Weise wird gewährleistet, dass das mit Hilfe des Schneidschildes entnommene Futter vom Transportboden in Richtung Walze weitergefördert wird und so ein Freiraum für die nächste von der Entnahmeeinrichtung zu entnehmende Futterportion entsteht.

In einer weiteren Ausführungsform ist der Mischraum vom Rahmen entkoppelt, wobei die Koppelstellen elektronische Gewichtssensoren umfassen. Bei den elektronischen Gewichtssensoren kann es sich beispielsweise um Wiegebolzen handeln, die grundsätzlich bekannt sind. Mittels der Wiegesensoren, die in bekannter Weise mit einer elektronischen Steuereinheit, vorzugsweise einem Wiegecomputer, verbunden sind, kann das Gewicht einer Futtermischung, welche regelmäßig aus mehreren verschiedenen Futterkomponenten wie beispielsweise Gras- und Maissilage, zusammengestellt wird, kontinuierlich ermittelt werden. Durch die vollständige Entkopplung des Mischraumes vom Rahmen ist es auch möglich, während des Befüllvorganges kontinuierlich das Gewicht des im Mischraum befindlichen Futters zu ermitteln und die Futterzufuhr bei Erreichen eines vorgegebenen Sollwertes zu stoppen.

Die Erfindung wird nachfolgend mit Bezug auf die Zeichnung näher erläutert. Die Figuren zeigen im Einzelnen:
- Fig. 1: zeigt den Futtermischwagen in einer Seitenansicht in Transport-, Misch- und Entladestellung,
- Fig. 2: zeigt den Futtermischwagen in einer Seitenansicht in Beladestellung,
- Fig. 3: zeigt eine Ansicht von hinten auf einen Schnittverlauf E-E,
- Fig. 4: zeigt eine Detailansicht der seitlichen Führung des Transportbandes, Einzelheit F,

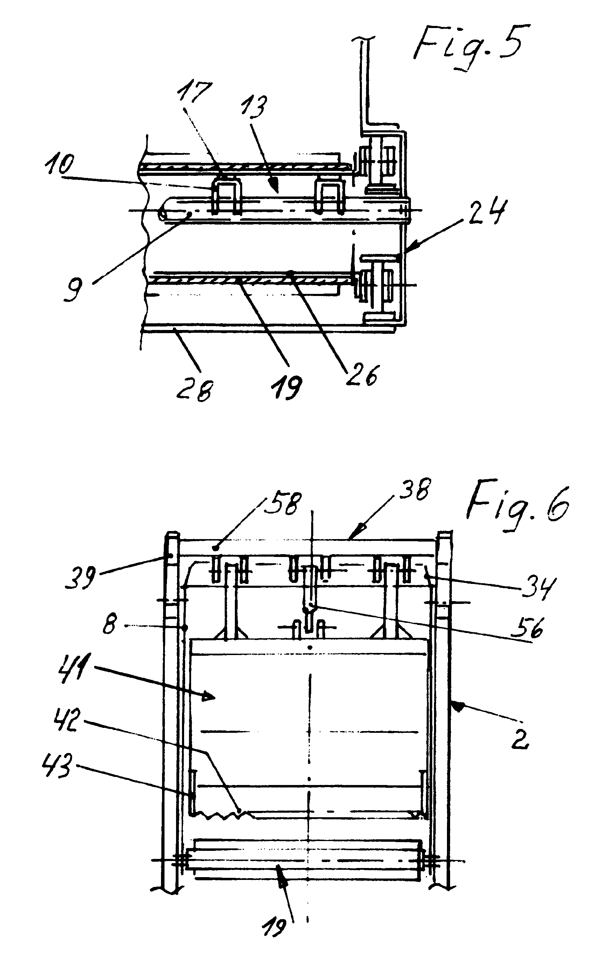

- Fig. 5: zeigt die Auflageführungen des Transportbandes, Schnitt G-G,
- Fig. 6: zeigt eine Ansicht von hinten auf das Schneidschild.
- Fig. 7: zeigt eine weitere Ausführungsform mit Ladeschaufel, verschiebbar gelagerter Walze, schwenkbar gelagerter Leit- und Staueinrichtung und einem im Frontbereich angeordneten Querband.

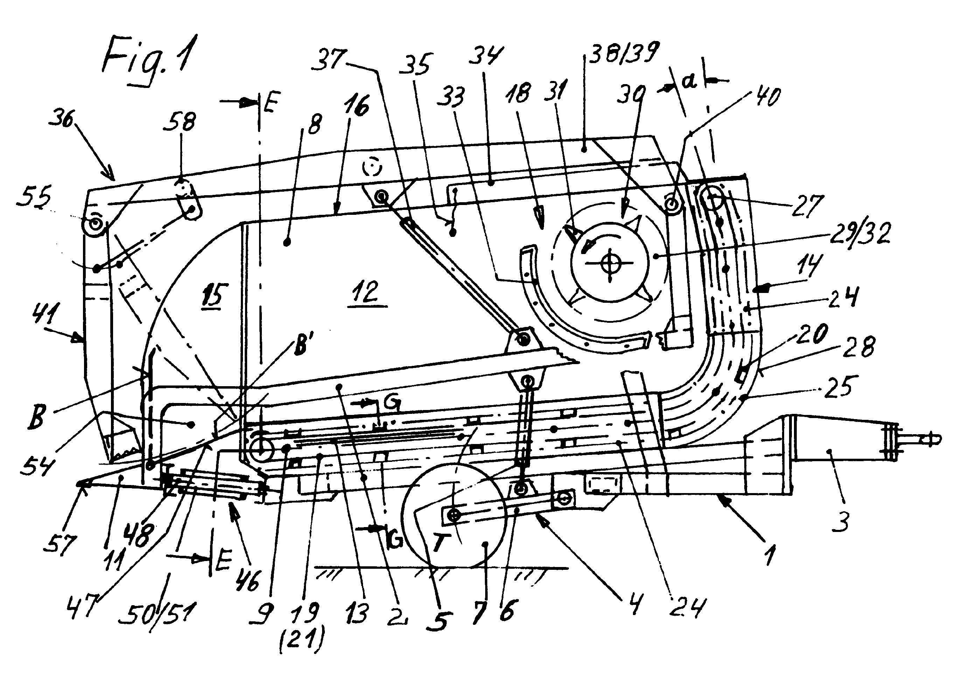

Ein erfindungsgemäßer Futtermischwagen ist in Fig. 1 als Anhängefahrzeug dargestellt. Er umfasst im Wesentlichen die Baugruppen Fahrgestell 1, Mischraum 12, Mischvorrichtung 18, Ladevorrichtung 36 und Querförderband 46 als Entladevorrichtung. Bestandteile des Fahrgestelles 1 sind der Rahmen 2, die Deichsel 3 und die Schwenkvorrichtung 40 mit mittels Hydrozylindern 5 verstellbaren Schwingen 6 und mit daran angeordneten Transporträdern 7.

Der Mischraum 12 wird gebildet aus den Seitenwänden 8; nach oben wird er zum Teil durch die Abdeckung 34 begrenzt. Die Heckseite 15 ist offen. Sie kann je nach auszuführendem Arbeitsgang durch ein Schneidschild 41 geschlossen werden. Die Unterseite des Mischraums wird durch einen Boden 13 begrenzt, der aus einem etwa horizontalen Abschnitt über einen Bogenteil, in eine in etwa vertikale Verlängerung übergeht, welche die Stirnwand 14 des Futtermischwagens ausbildet.

Der Boden 13 besteht aus Querträgern 9, welche darauf angeordnete Schienen 10 mit auswechselbaren Gleitleisten 17 tragen, wobei die Querträger 9 unterhalb der Seitenwände 8 angeordneten Führungsschienen 24 miteinander verbinden.

Die Mischvorrichtung 18 besteht im Wesentlichen aus einem Transportband 19 und der von einer Leit- und Staueinrichtung 33 teilweise ummantelten Walze 30. Die Leit- und Staueinrichtung (33) ist auf einer Drehachse (70) bei Einhaltung eines Mindestabstandes (x) zur Walze (30), pendelnd gelagert. Zur Einstellung des Abstandes (x) ist ein in den Figuren nicht näher dargestelltes Einstellelement vorgesehen, mittels dessen die Leit- und Stauvorrichtung (33) stufenlos oder mittels Verriegelung abgestuft einstellbar ist.

Das Transportband 19 umläuft den Boden 13. Es ist beidseitig von Rollenketten 21 eingefasst, die über Querstreben 26 miteinander verbunden sind und auf welchen es anliegt. Es soll aber auch nicht ausgeschlossen sein, dass das Transportband anders geführt wird und dass anstelle von Rollenketten beispielsweise Profilstahlketten oder Nockenprofilriemen Verwendung finden.

Oberhalb einer Anzahl von Querstreben 26 sind auf dem Transportband 19 Mitnehmerleisten 20 angebracht. Die Querstreben 26 stabilisieren die Führung der Rollenketten 21 und schützen in Verbindung mit den Mitnehmerleisten 20 das Transportband 19 gegen Durchhängen bei hohem Ladegewicht. Die Rollen 22 der Rollenketten 21 verlaufen in Führungsschienen 24, welche von einem waagerechten Verlauf, mittels der Kurvenbahn 25, in einen in etwa vertikalen Verlauf übergehen. An beiden Enden der Führungsschienen 24 sind Umlenkwalzen 27, die beidseitig mit Kettenrädern 23 zur Umlenkung und zum Antrieb der Rollenketten 21 und damit auch des Transportbandes 19 ausgerüstet sind, angeordnet. Damit das Eindringen von Futter in die Führungsschienen 24 und den Zwischenraum vom oberen und unteren Trum des Förderbandes 19 verhindert wird, sind Abdeckleisten 45 über den Seitenrändern angebracht.

Mindestens eine der Umlenkwalzen 27 ist mit einer Spannvorrichtung versehen. An der Umlenkwalze 27 ist ein hydraulischer Antrieb vorgesehen, der die Laufgeschwindigkeit des Transportbandes 19 regelt und die Laufrichtung von Vorlauf auf Rücklauf umschalten kann. Das Transportband 19 ist nach unten und stirnseitig von einem Schutzmantel 28 abgeschirmt.

Ein weiterer Bestandteil der Mischvorrichtung 18, die Walze 30, ist mit Zinken 31 oder anderen Werkzeugen besetzt, die teilweise mit scharfen Kanten zum Zerkleinern des zugeführten Futters ausgerüstet sein können. Die Walze 30 trägt an beiden Seiten eine Schneckenspirale 29 und 32 mit nach innen gerichteter Förderwirkung. Bei einer einfacheren Ausführungsform ist es auch möglich, auf die Schneckenspiralen 29 und 32 zu verzichten und die Walze nur mit Zinken 31 zu bestücken. Die Walze 30 ist zum Mischraum 12 und nach unten durch die Leit- und Staueinrichtung 33 abgedeckt.

Die Ladevorrichtung 36 besteht aus einer über Hydrozylinder 37 auf und ab beweglichen Schwinge 38, welche mit ihren Schwenkarmen 39 an Gelenken 40 am Rahmen 2 gelagert ist. An den Enden der über Quertraversen 58 verbundenen Schwenkarme 39 ist ein an der Unterkante mit Messern 42 bestücktes Schneidschild 41 an den Gelenken 55, über Hydrozylinder 56 verschwenkbar, angehängt. Die Schwinge 38 kann auch in bekannter Weise, zur Längeneinstellung, mit teleskopisch ausgeführten Schwenkarmen ausgestattet sein.

Es soll aber auch nicht ausgeschlossen sein, dass die Ladevorrichtung 36 mit einer an sich bekannten Entnahmefräse oder einem sogenannten Kratzschild an Stelle des Schneidschildes 41 ausgerüstet ist.

Das Querförderband 46 ist im unteren Bereich der Heckseite 15 hinter dem Transportboden 19 angebracht. Es wird beim Beladen und beim Mischen von einer Abdeckplatte 47, die zum Austragen des Futters von einer Position B' in eine Position B hochgeklappt wird, brückenartig überdeckt. Das Querförderband 46 besteht im Wesentlichen aus dem Umlenkrollen 48 tragenden Gestell 49 und dem mit Mitnehmerleisten 51 besetzten Förderband 50, welches hydraulisch angetrieben wird und Futter durch die Austragsöffnungen an der linken oder rechten Seite in einem Futtergang ablegt.

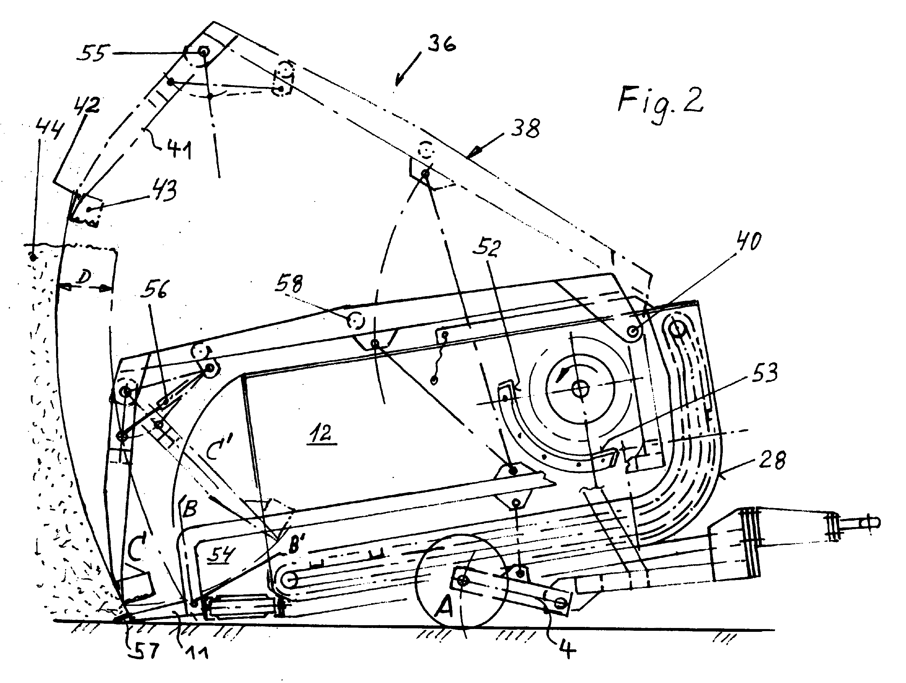

Aus Fig. 2 ist ersichtlich, wie zur Beladung des Futtermischwagens dieser mit angehobener Ladevorrichtung 36 an ein Flachsilo 44 herangefahren wird; durch Verstellung der Schwenkvorrichtung 4 mittels Hydrozylinder 5 wird er aus der Transportstellung T in die Arbeitstellung A abgesenkt, wo eine Schürfkante 57 einer Einfüllschwelle 11 bis auf den Boden herabgelassen und unter ein Flachsilo 44 geschoben wird.

Das Schneidschild 41 wird um das Maß einer gewünschten, abzutrennenden Futterschichtdicke D über das Flachsilo 44 geschwenkt. Beim Absenken des Schneidschildes 41 trennen die an der Unterkante waagerecht oszillierenden Messer 42 und Seitenmesser 43 die vorgegebene Futterschichtdicke D vom Flachsilo 44 ab. Das abgetrennte Futter wird durch die offene Heckseite 15 über die Einfüllschwelle 11 und Abdeckplatte 47 durch Verschwenken des Schneidschildes 41 auf das Transportband 19 bzw. in den Mischraum 12 geschoben.

Dieser Vorgang wiederholt sich im Allgemeinen mehrfach solange, bis die gewünschte Futtermenge in den Mischraum 12 eingefüllt worden ist. Anschließend wird der Futtermischwagen in Transportstellung T gebracht (Fig. 1). In analoger Weise können weitere Futterlagerstätten, beispielsweise Flachsilos für andere Grundfutterarten, zur Beladung des Mischraumes mit weiteren Futterkomponenten angefahren werden.

Zum Mischen fördert das Transportband 19 das Futter mit Unterstützung der Mitnehmerleisten 20 in Richtung Stirnwand 14 und unter die mit der Leit- und Staueinrichtung 33 gegen Wickeln und Verstopfen geschützte Walze 30, welche, durch das stirnseitig nach oben führende Transportband 19 unterstützt, das Futter mit ihren Zinken 31 erfasst und in den Mischraum 12 wirft. Die Walze 30 nimmt das Material, welches durch die Schwerkraft bzw. durch das Transportband 19 auf die Walze 30 fällt, auf und schleudert es wieder in den Mischraum 12. Die Leit- und Staueinrichtung 33 schirmt dabei die Walze gegen aus dem Mischraum 12 in Richtung auf die Walze 30 gefördertes Futter aus dem Mischraum 12, welches die Walze 30 sonst von der dem Mischraum zugewandten Seite blockieren könnte.

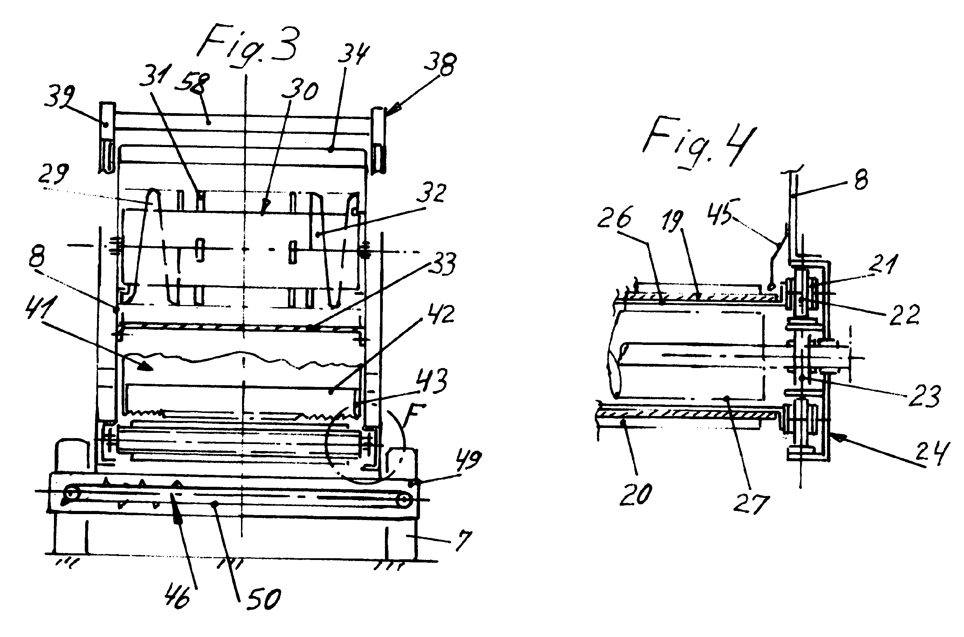

Seitlich auf die Walze 30 aufgesetzte Schneckenspiralen 29 und 32 (vgl. Fig. 3) fördern das Futter zur Mitte des Mischraumes 12 und unterstützen den Mischvorgang. Um Futterverluste und Verunreinigungen der Futtergänge durch über die Seitenwände 8 fallendes Futter zu vermeiden, ist eine Abdeckung 34 über der Walze 30 angeordnet, die mit einer Pendelklappe oder einer Prallplane 35 ausgestattet ist. Auch der Schutzmantel 28 verhindert Verunreinigungen der Futtergänge und Futterverluste.

Zur Optimierung der Futterführung ist das Transportband 19 im Bereich der Stirnwand 14 um einen Winkel α in Richtung Walze 30 umgelenkt.

Die unterhalb und oberhalb der Leit- und Staueinrichtung 33 angeordneten Verlängerungen 52 und 53 verbessern den Schutz der Walze 30 gegen Verstopfen und Wickeln.

Durch mehrmaliges Umwälzen des Futters entsteht bei allen Futterarten und Futterzuständen ein lockeres, homogenes Futter, welches ohne Kluten und Verdichtungen dem Vieh beim Fressen eine Selektion des Futters nicht mehr erlaubt.

Zum Austragen der fertigen Futtermischung wird der Futtermischwagen in Transportstellung T gebracht (Fig. 1). Danach wird die Abdeckplatte 47 in eine etwa senkrechte Position B aufgeklappt, verschließt teilweise die Heckseite 14 und gibt dabei das Querförderband 46 frei, so dass es vom auf Rücklauf umgeschalteten Transportband 19 mit Futter beschickt wird. Das vom Querband 46 übernommene Futter wird je nach Bedarf auf der rechten oder linken Seite aus dem fahrenden Futtermischwagen durch die Austrittsöffnungen 54 in einen Futtertrog abgelegt.

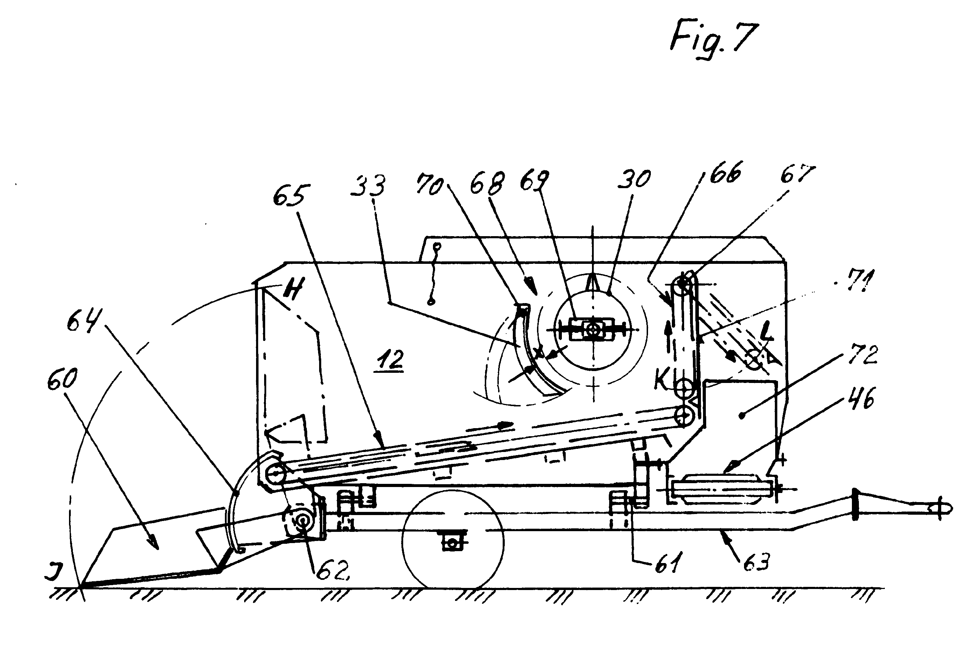

Figur 7 zeigt eine andere Ausgestaltung des erfindungsgemäßen Futtermischwagens, die vorteilhaft für die Aufnahme von zu vermischenden, von Siloblockschneider von Flachsilos abgetrennten Futterblöcken, von Rund- oder Quaderballenpressen erstellten Futterballen oder auch von schüttgutartigen Futtermitteln geeignet ist.

In Ausführungsform gem. Fig. 7 ist am hinteren Endes des Fahrgestells 63 eine Ladeschaufel 6 angeordnet, die zwischen einer Ladeposition 7 und einer Transportposition H, um die am Fahrgestell 63 angeordnete Drehachse 62, über nicht näher dargestellte Hydrozylinder, verschwenkbar ist. Die das hintere Ende des Fahrgestells 63 bildende konvexe Rückwand 64 ist an die Kontur und den Schwenkweg der Ladeschaufel 60 angepasst, so dass Futterverluste über die dem Mischraum zugekehrte offene Seite der Ladeschaufel 60 verhindert werden. Die Rückwand 64 endet oberhalb des Transportbandes 65.

Die Anordnung einer allgemein bekannten Wiegeeinrichtung bedingt, dass Mischraum 12 und Fahrgestell 63 separate Einheiten bilden, welche mittels Gewichtssensoren 61 miteinander verbunden sind. Die Ladeschaufel 60 ist hierbei dem Fahrgestell 63 zugeordnet. Innerhalb des von den Gewichtssensoren 61 getragenen Mischraumes 12 befindet sich die Mischvorrichtung 68, die im Wesentlichen aus dem den Boden bildenden Transportband 65, dem vertikal angeordneten, um die Drehachse 67 verschwenkbaren Transportband 66, der in Führungen 69 verschiebbaren Walze 30 und der um die Drehachse 70 pendelbaren Leit- und Staueinrichtung 33 besteht. Vorn am Mischraum 12 ist ein Querförderband 46 angeordnet.

Zur Befüllung des Mischraumes 12 wird die in Ladeposition 7 befindliche Ladeschaufel 60 durch Zurücksetzen des Futtermischwagens unter das aufzunehmende Futter geschoben. Danach wird die Ladeschaufel 60 zur Abgabe des Futters in den Mischraum 12 in die Misch- und Transportposition H geschwenkt. Das auf das Transportband 65 abgelegte Futter wird zunächst, um Freiraum zur weiteren Futteraufnahme zu schaffen, nach vorn verschoben, da im Allgemeinen mehrere Ladevorgänge zur Befüllung notwendig sind. Der Mischvorgang wird durch die gleichzeitige Ingangsetzung der Transportbänder 65 und 66 der Walze 30 eingeleitet. Das vom Transportband 65 nach vorn geführte Futter schwenkt die pendelnde Leit- und Staueinrichtung 33 bis auf einen Mindestabstand X, der durch Anschläge gewährleistet ist, an die Walze 30 heran. Das dann vom Transportband 66 und von der Walze 30 erfasste Futter wird nach oben geführt und dann von der Walze 30 erfasst und in den Mischraum 12 geschleudert. Die an der Außenseite des Transportbandes 66 angeordnete Schutzwand 71 vermeidet, dass zwischen den Transportbändern 65 und 66 durchlaufende und über dem Transportband 66 mitgenommene Futterreste aus dem Mischraum 12 austreten.

Nach dem der bereits beschriebene Mischvorgang ausgeführt ist, wird das Futter dem Vieh vorgelegt. Hierzu wird das Transportband 66 mittels nicht dargestellter Hydrozylinder aus der Position K in die Position L aufgeschwenkt. Das Transportband 65 führt das Futter nach vorn. Die Walze 30 kann abgeschaltet sein oder, nach Bedarf, mit verringerter Drehzahl umlaufen. Das Transportband 66, welches auf umgekehrte Laufrichtung umgeschaltet ist, erfasst das Futter und lenkt es auf das umlaufende Querförderband 46, welches es durch seitliche Austrittsöffnungen 72 auf der linken oder rechten Seite des Futtermischwagens in einem Futtergang ablegt.

### Bezugszeichenliste:

| Nr. Bezeichnung | Nr. Bezeichnung | Bezeichnung |
|---|---|---|
| 1 Fahrgestell | 29 Schneckenspirale | 57 Schürfkante |
| 2 Rahmen | 30 Walze | 58 Quertraverse |
| 3 Deichsel | 31 Zinken | 59 Endbereich |
| 4 Schwenkvorrichtung | 32 Schneckenspirale | 60 Ladeschaufel |
| 5 Hydrozylinder | 33 Leit- und Staueinrichtung | 61 Gewichtssensoren |
| 6 Schwinge | 34 Abdeckung | 62 Drehachse |
| 7 Transporträder | 35 Prallplane | 63 Fahrgestell |
| 8 Seitenwand | 36 Ladevorrichtung | 64 Rückwand |
| 9 Querträger | 37 Hydrozylinder | 65 Transportband |
| 10 Schiene | 38 Schwinge | 66 Transportband |
| 11 Einfüllschwelle | 39 Schwenkarm | 67 Drehachse |
| 12 Mischraum | 40 Gelenk | 68 Mischvorrichtung |
| 13 Boden | 41 Schneidschild | 69 Führung |
| 14 Stirnwand | 42 Messer | 70 Drehachse |
| 15 Heckseite | 43 Seitenmesser | 71 Schutzwand |
| 16 Oberseite | 44 Flachsilo | 72 Austrittsöffnung |
| 17 Gleitleiste | 45 Abdeckleiste | |
| 18 Mischvorrichtung | 46 Querförderband | |
| 19 Transportband | 47 Abdeckplatte | |
| 20 Mitnehmerleiste | 48 Umlenkrolle | |
| 21 Rollenkette | 49 Gestell | |
| 22 Rolle | 50 Förderband | |
| 23 Kettenrad | 51 Mitnehmerleiste | |
| 24 Führungsschiene | 52 Verlängerung | |
| 25 Kurvenbahn | 53 Verlängerung | |
| 26 Querstrebe | 54 Austrittsöffnung | |
| 27 Umlenkwalze | 55 Gelenk | |
| 28 Schutzmantel | 56 Hydrozylinder | |
| α Winkel | | |
| ß Winkel | | |
| B Position | | |
| B' Position | | |
| T Transportstellung | | |
| A Arbeitsstellung | | |
| C Stellung | | |
| C' Stellung | | |
| D Futterschichtdicke | | |
| E-E Schnitt | | |
| F Einzelheit | | |
| G-G Schnitt | | |
| H Transportposition. | | |
| I Ladeposition | | |
| K Position | | |
| L Position | | |
| X Mindestabstand | | |

## Patentansprüche

1. Verfahrbarer oder selbstfahrender Futtermischwagen zur Aufbereitung von Mischfutter, umfassend
• einen umlaufenden Transportförderer, der an der Unterseite eines Mischraumes das auf ihm lagernde Futter horizontal bewegt und es an wenigstens einem Endbereich nach oben hin fördert,
• und eine Walze, die mit dem Transportförderer zusammenwirkt und das nach oben geförderte Futter ergreift und in den Mischraum des Mischsystems zurückwirft,
**gekennzeichnet dadurch, dass** die Walze (30) mit einer Leit- und Staueinrichtung (33) zusammenwirkt, welche so angebracht ist, dass das in Richtung eines Endbereiches vom Transportförderer (19) geförderte Futter mittels der Leit- und Staueinrichtung (33) von der Walze (30) zurückgehalten wird.

2. Futtermischwagen nach Anspruch 1, **dadurch gekennzeichnet, dass** die Leit- und Staueinrichtung (33) beim Mischvorgang auf der der Walze (3) abgewandten Seite gegen die Förderrichtung des Transportbandes (19;65) gerichtet ist.

3. Futtermischwagen nach Anspruch 1 **gekennzeichnet dadurch, dass** der Futtermischwagen zusätzlich mit einer Ladevorrichtung (36) zum Entnehmen des Futters aus einem Flachsilo (44) ausgerüstet ist.

4. Futtermischwagen nach Anspruch 3 **dadurch gekennzeichnet, dass** es sich bei der Ladevorrichtung um eine Ladeschaufel (60) handelt.

5. Futtermischwagen nach Anspruch 3, **dadurch gekennzeichnet, dass** es sich bei der Ladevorrichtung (36) um ein Schneidschild (41) handelt.

6. Futtermischwagen nach Anspruch 1, **dadurch gekennzeichnet, dass** die Walze (30) mit Zinken (31) ausgestattet ist.

7. Futtermischwagen nach einem der Ansprüche 1 bis 6, **dadurch gekennzeichnet, dass** die Walze (30) an ihren Enden mit Schneckenspiralen (29 und 32) ausgestattet ist, deren Förderrichtung zur Mitte des Mischraumes (12) führt.

8. Futtermischwagen nach einem der Ansprüche 1 bis 7, **dadurch gekennzeichnet, dass** die Walze (30) in Führungen (69) gelagert ist.

9. Futtermischwagen nach einem der Ansprüchen 1 bis 10, **dadurch gekennzeichnet, dass** eine Abdeckung (34) oberhalb der Walze (30) angeordnet ist

10. Futtermischwagen nach Anspruch 1, **dadurch gekennzeichnet, dass** das Transportband (19) an der Unterseite und an der Stirnseite von einem Schutzmantel (28) abgedeckt ist.

11. Futtermischwagen nach Anspruch einem der vorhergehenden Ansprüche, **dadurch gekennzeichnet, dass** das Transportband (19) im Bereich der Stirnwand (14) vertikal oder nahezu vertikal, nach oben umgelenkt ist.

12. Futtermischwagen nach Anspruch 14, **dadurch gekennzeichnet, dass** das Transportband (19), um einen Winkel (α) in Richtung Walze (30) umgelenkt ist.

13. Futtermischwagen nach Anspruch 1 oder einem der vorhergehenden Ansprüche, **dadurch gekennzeichnet, dass** am hinteren Ende eines Bodens (13) ein Querförderband (46) angeordnet ist.

14. Futtermischwagen nach einem der vorhergehenden Ansprüche, **dadurch gekennzeichnet, dass** das am Ende der Ladevorrichtung (36) angeordnete Schneidschild (41) mit seiner Unterkante aus der Schneidstellung (C) durch die offene Heckseite (15) über eine Abdeckplatte (47) bis oberhalb des Transportbodens (19) in den Mischraum (12) bis in die Stellung (C) einschwenkbar ist.

15. Futtermischwagen nach Anspruch 1 oder einem oder mehreren der vorhergehenden Ansprüche, **dadurch gekennzeichnet, dass** die Leit- und Staueinrichtung (33) auf einer Drehachse (70), bei Einhaltung eines Mindestabstandes (x) zur Walze (30), pendelnd gelagert ist.
